# EUROPÄISCHE PATENTANMELDUNG

(11) **EP 2 649 875 A2**
(43) Veröffentlichungstag der Anmeldung: **16.10.2013**
(21) Anmeldenummer: 13163591.4
(22) Anmeldetag: 12.04.2013
(51) Int. Cl.: A01K 1/03, A01K 1/00

(54) **Mobiler, passiver Klimaschrank**

(30) Priorität: 12.04.2012 DE 202012101337 U
(71) Anmelder: Tiegel GmbH, 01454 Radeberg (DE)
(72) Erfinder: Tiegel, Uwe, 01454 Radeberg (DE)
(74) Vertreter: Lippert, Stachow & Partner

(57) **Zusammenfassung**

Die Erfindung betrifft einen mobilen Klimaschrank (1), welcher ein durch eine Tür verschließbares luftdichtes Gehäuse, Luftanschlüsse sowie Mittel zum Erzeugen einer Strömung im Inneren des Klimaschrankes umfasst. Dabei liegt der Erfindung die Aufgabe zugrunde, einen Klimaschrank (1) zu schaffen, dessen Immissionen auf dessen Inhalt minimiert und dessen innere Luftströmung vergleichmäßigt werden. Die Aufgabe wird dadurch gelöst, dass ein mobiler Klimaschrank (1) ein Gehäusewände aufweisendes und durch zumindest eine Tür (7) verschließbares luftdichtes Gehäuse, zumindest einen Zuluftanschluss (10) und einen Abluftanschluss (11) sowie sich paarweise gegenüberliegende Mittel zum Erzeugen einer horizontalen Strömung umfasst.

## Beschreibung

Die Erfindung betrifft einen mobilen Klimaschrank, welcher ein durch eine Tür verschließbares luftdichtes Gehäuse, Luftanschlüsse sowie Mittel zum Erzeugen einer Strömung im Inneren des Klimaschrankes umfasst.

Ein Klimaschrank der eingangs beschriebenen Art ist dem Fachmann bekannt und wird für eine Vielzahl verschiedener Anwendungen genutzt. Eine übliche Anwendung ist die zeitweise Lagerung von Organismen, also individuellen Lebewesen, beispielsweise in Form von wissenschaftlichen Kleintieren, unter gegebenen klimatischen Bedingungen.

Die, beispielsweise von der Pharmaindustrie, eingesetzten Versuchstiere werden vereinzelt sehr aufwendigen Vorbereitungen unterzogen, bevor sie für Versuchszwecke Verwendung finden. So werden Versuchstiere z.B. gezielt operiert, um bestimmte Krankheitsbilder darzustellen. Nach solchen operativen Eingriffen müssen sich die Versuchstiere erholen, bevor beispielsweise neuartige Therapien an ihnen getestet werden können. Zu diesem Zweck werden sie steril und unter angemessenen Bedingungen hinsichtlich der Umgebung und Mindestanforderungen an Bewegungsfreiheit, Futter und Pflege, oft über längere Zeiträume, in Klimaschränken untergebracht.

Hinzu kommt, dass die Sinneswahrnehmungen von Versuchstieren teilweise weit über die der menschlichen Leistungsfähigkeit hinausgehen. Vor allem die Schallwahrnehmung ist bei vielen Tieren gegenüber der des Menschen in Richtung Ultra- und/oder Infraschall erweitert. So dass zum Zwecke der Genesung eine möglichst Schallarme Umgebung bevorzugt wird. Ebenfalls erweitert können Sinneswahrnehmungen für elektrische Felder sein, so dass Fragen der elektromagnetischen Umweltverträglichkeit in erhöhtem Maße berücksichtig werden müssen.

Eine bekannte Ausführungsform eines Klimaschrankes sieht dabei vor, konditionierte Zuluft von unten in einen Klimaschrank einzuleiten, so dass diese das Innere des Klimaschrankes vertikal durchströmt und mittels eines oben am Klimaschrank anbraten Gebläses durch einen Filter aus dem Klimaschrank gefördert wird. Der Klimaschrank umfasst ebenfalls horizontale, möglichst luftdurchlässige, gitterförmige Einlegeböden über denen z.B. Zuchtkäfige angeordnet sind.

Diese Ausführungsform eines mobilen Klimaschrankes ist in seiner Ausgestaltung nachteilig an die Erfordernisse der wissenschaftlichen Kleintierhaltung angepasst.

Durch die Behandlung der Abluft am Klimaschrank werden Versuchstiere durch, von der Rotation des Gebläses erzeugte, Vibrationen der Luft sowie des Schrankgehäuses ständig einem erhöhten Geräuschpegel ausgesetzt. Gleichzeitig erzeugt der dafür benötigte elektrische Antrieb ein elektromagnetisches Wechselfeld, welches in die Umgebung abstrahlt und dadurch ebenfalls die von Versuchstieren störend beeinflussen kann.

Als nachteilig erscheint bei der eingangs erwähnten Ausführungsform des Klimaschrankes ebenfalls die Lösung hinsichtlich der Luftströmung im Inneren des Klimaschrankes.

Dies liegt zum einen darin begründet, dass die konstruktive Ausführung der Luftdurchlässe am Boden und an der Decke des Klimaschrankes in der Art gestaltet ist, dass die Zu- bzw. Abluft nicht über der gesamten Breite eines Einlegebodens, auf dem auch die Zuchtkäfige stehen, in diesen eintritt bzw. aus diesem austritt. Dies führt zu einer ungleichmäßigen Geschwindigkeitsverteilung der Luftströmung und damit auch zu unterschiedlichen Umgebungsbedingungen der Versuchstiere. Damit einher geht ebenfalls eine Ungleichmäßigkeit hinsichtlich der gefühlten Temperatur der einzelnen Versuchstiere.

Zum anderen wird die Ungleichmäßigkeit der Geschwindigkeitsverteilung weiter dadurch ungünstig beeinflusst, dass Zuchtkäfige im Allgemeinen einen soliden, d.h. luftundurchlässigen Boden aufweisen, so dass die vertikal nach oben strömende Luft an diesen vorbei und vielmehr durch die Lücken der, mit einem gewissen Abstand zueinander aufgestellten, Zuchtkäfige hindurch strömt.

Der Erfindung liegt somit die Aufgabe zugrunde, einen Klimaschrank zu schaffen, dessen Immissionen auf den Inhalt eines Klimaschrankes minimiert und dessen innere Luftströmung vergleichmäßigt werden.

Die Aufgabe wird dadurch gelöst, dass ein mobiler Klimaschrank durch zumindest eine Tür verschließbares luftdichtes Gehäuse, zumindest einen Zuluftanschluss und einen Abluftanschluss sowie sich paarweise gegenüberliegende Mittel zum Erzeugen einer horizontalen Strömung umfasst.

Zweckmäßigerweise besteht der Klimaschrank in einer Ausführungsform der Erfindung aus einem von Gehäusewänden begrenztem quaderförmigen Gehäuse, welches fahrbar, beispielsweise auf Rädern oder Rollen, gelagert ist. Zum Zweck der Einbringung oder Entnahme von Lagergut aus oder in das Innere des Gehäuses, den Nutzraum, ist dieser mit einer Tür versehen, welche vorteilhafterweise zumindest teilweise aus einem transparentem Material, wie beispielsweise Glas, bestehen kann, um den Inhalt des Nutzraumes sehen zu können. Um zu verhindern, dass die Strömung innerhalb des Nutzraums gestört wird, ist das Gehäuse vorzugsweise luftdicht ausgeführt. Dies verhindert zum einen ein Eindringen von Luft aus dem Aufstellraum des Klimaschrankes in diesen hinein und zum anderen das Austreten von Luft aus dem Klimaschrank heraus. Die luftdichte Ausführung des Gehäuses ist vor allem in dem Fall vorteilhaft, wenn Lagergut entweder selbst Träger von Krankheitserregern und die Umgebung vor diesen geschützt werden muss oder wenn Lagergut vor dem Eindringen von Krankheitserregern von außen geschützt werden muss. In einer weiteren Ausführungsform der Erfindung ist das Gehäuse zumindest abschnittsweise gedämmt ausgeführt, um die Verlustwärmeströme über die Gehäusewände und die Tür zu reduzieren und so die Gesamtenergiebilanz zu verbessern.

Zur Versorgung mit Zuluft bzw. der Entsorgung von Abluft des Klimaschrankes weist dieser zumindest einen Zuluftanschluss und einen Abluftanschluss auf. Zweckmäßig ist es dabei, dass sowohl der Zuluftanschluss als auch der Abluftanschluss an der gleichen Gehäusewand angeordnet sind. Gegenüber der bereits bekannten und eingangs erwähnten Lösung die Zuluft von unten in den Klimaschrank einzubringen und die Abluft oben aus dem Klimaschrank abzuführen, ergibt sich erfindungsgemäß der Vorteil den Klimaschrank mit geringerem Widerstand verfahren zu können, da keine, ein Verfahren behindernden Schläuche auf dem Boden des Aufstellraumes angeordnet sind. Zuluftanschluss und Abluftanschluss können dabei separiert voneinander angeordnet sein, so dass sie über zwei Luftführungselemente, beispielsweise Schläuche oder Rohre, mit einem im selben Raum aufgestellten Klimagerät oder einer zentralen Klimaanlage des Gebäudes verbunden sind. Zuluftanschluss und Abluftanschluss können aber auch so angeordnet sein, dass ein Luftführungselement nach dem "Schlauch-in-Schlauch-Prinzip" angeschlossen werden kann. Dadurch wird die Anzahl notwendiger Schläuche reduziert und ein Bewegen des Klimaschrankes wird vereinfacht.

Zum Erzeugen einer horizontalen Strömung innerhalb des Nutzraumes umfasst der Klimaschrank sich paarweise gegenüberliegende Mittel. Dabei sind diese in einer vorteilhaften Ausgestaltung der Erfindung so ausgeführt, dass sowohl das Mittel zum Einströmen von Zuluft in den Nutzraum als auch das Mittel zum Auströmen von Abluft aus dem Nutzraum so ausgeführt sind, dass sie in ihrer Funktion untereinander austauschbar sind. Zweckmäßig ist dabei eine gegenüberliegende Anordnung, um ein möglichst geradliniges Durchströmen des Nutzraumes zu ermöglichen. Dabei können die Mittel zum Erzeugen der horizontalen Strömung beispielsweise so ausgeführt sein, dass sie ein integraler Bestandteil des Gehäuses sind oder aber auch so, dass sie zumindest teilweise als Baugruppe ausgeführt sind und dem Gehäuse so teilweise entnommen werden können.

In einer Ausführungsform der Erfindung werden beispielsweise Zuchtkäfige, mit darin enthaltenen wissenschaftlichen Kleintieren, in den Klimaschrank eingebracht. Die Zuchtkäfige sind dabei vorteilhafterweise mit einem soliden und luftundurchlässigen Boden ausgestattet, wobei der Rest des Zuchtkäfigs, d.h. seine Seitenwände und seine Decke, meist ein Drahtgeflecht aufweist. Eine horizontale und weitestgehend laminare Grundströmung innerhalb des Nutzraumes ist für die Verbringung der eben beschriebenen Art von Zuchtkäfigen besonders vorteilhaft. Einerseits wird die horizontale Grundströmung nicht durch die Ausgestaltung der Zuchtkäfige behindert und andererseits besitzt eine weitestgehend laminare Grundströmung an fast alle Positionen innerhalb des Nutzraumes die gleichen Strömungsbedingungen, in Form von Betrag und Richtung der Geschwindigkeitsvektoren. Störungen der laminaren Strömung, in Form von Turbulenzen, entstehen lediglich durch das eingangs erwähnte Drahtgeflecht der Zuchtkäfige und die wissenschaftlichen Kleintiere selbst.

Zweckmäßigerweise umfasst ein Mittel zum Erzeugen einer horizontalen Strömung zumindest einen Luftdurchlass. Der Luftdurchlass ist vorzugsweise plattenförmig als Hohlraum ausgeführt und weißt Luftdurchlassöffnungen auf.

Vorzugsweise sind die plattenförmig ausgeführten Luftdurchlässe so dimensioniert, dass sie in Länge und Breite annähernd der Länge und Breite einer Gehäusewand entsprechen. Luftdurchlassöffnungen sind dabei zweckmäßigerweise so verteilt, dass bei einer Unterteilung der Fläche des Luftdurchlasses in Teilflächen gleichen Flächeninhaltes in jeder dieser Teilflächen die gleiche Anzahl Luftdurchlassöffnung angeordnet ist. Bei der erfindungsgemäßen Verwendung von sich paarweise gegenüberliegenden Mitteln zur Erzeugung einer horizontalen Strömung in einem beispielsweise quaderförmigen Gehäuse wird dadurch ein großflächiges Durchströmen, d.h. annähernd über die gesamte Nutzraumhöhe sowie Nutzraumtiefe, erreicht.

Die Flächeninhalte, der beispielsweise kreisförmig ausgeführten Luftdurchlassöffnungen, sind dabei in einer Ausführungsform des erfindungsgemäßen Gegenstandes gleich. Damit die Austrittsgeschwindigkeit der Zuluft aus Luftdurchlassöffnungen bei dieser Art der Ausführung gleich ist, muss der Totaldruck der Zuluft vor jeder Luftdurchlassöffnung im Hohlraum des Luftdurchlasses gleich sein.

Ist der Totaldruck der Zuluft vor jeder Luftdurchlassöffnung im Hohlraum des Luftdurchlasses nicht gleich, so sind bei dieser Ausführungsform der Erfindung die Flächeninhalte der Luftdurchlassöffnungen nicht gleich. Vielmehr sind die Flächeninhalte so ausgeführt, dass das Produkt von Flächeninhalt einer Luftdurchlassöffnung und Austrittsgeschwindigkeit der Luft aus dieser Luftdurchlassöffnung konstant ist. Zweckmäßig ist demnach die Ausführung der Erfindung, so dass Luftdurchlässe austauschbar sind.

Wie eingangs beschrieben können Zuluftanschluss und Abluftanschluss unterschiedlich am Gehäuse des Klimaschrankes angeordnet sein. Gleiches gilt für die Anordnung der Luftdurchlässe im Gehäuse des Klimaschrankes. Um die Zuluft dennoch annähernd gleichmäßig auf der dem Nutzraum abgewandten Seite des Luftdurchlasses zu verteilen, umfassen die Mittel zum Erzeugen einer horizontalen Strömung Luftleiteinrichtungen. Diese sind in einer weiteren Ausführungsform der Erfindung beispielsweise als gebogene Luftleitbleche ausgeführt, welche auf Gehäusewänden angeordnet sind, an denen Luftdurchlässe angeordnet sind.

Zweckmäßigerweise umfasst der Klimaschrank in einer vorteilhaften Weiterbildung der Erfindung Einlegeböden sowie Haltevorrichtungen für Einlegeböden.

Einlegeböden sind zweckmäßig so gestaltet, dass sie leicht sind, um eine Einbringen und Entnehmen in bzw. aus dem Klimaschrank zu erleichtern, dass sie ihre Oberfläche eben und wenig zerklüftet ist, um eine Reinigung, insbesondere Sterilisierung, zu erleichtern und dass sie für vertikale Luftbewegungen im Nutzraum durchlässig sind.

In einer Ausführungsform der Erfindung sind die Haltevorrichtung der Einlegeböden jeweils paarweise an plattenförmigen, sich gegenüberliegenden, Luftdurchlässen angeordnet, so dass die Einlegeböden in den Nutzraum eingebracht werden, um darauf beispielsweise Zuchtkäfige oder Anderes abzustellen.

Für die gerade beschriebene Ausführungsform ist es zweckmäßig, dass die Gesamtbreite zumindest eines Einlegebodens größer als das Lichtmaß sich paarweise gegenüberliegender Luftdurchlässe ist. Durch Einbringen von Einlegeböden werden Luftdurchlässe gegenseitig verspannt wodurch sich deren Biegeresonanzfrequenz, welche beispielsweise durch eine Luftströmung angeregt werden kann, zu höheren Frequenzen verschiebt und somit Immissionen, auf beispielsweise lebendiges Lagergut, reduziert werden.

Vorzugweise wird ein Klimaschrank zumindest teilweise aus Werkstoffen gefertigt, die der Werkstoffgruppe der korrosions- und/ oder säurebeständigen Stähle angehören.

Lagergut in Form von lebenden Organismen erhöht einerseits durch Atmung andererseits durch Ausscheiden von, teilweise aggressive Substanzen aufweisenden, Exkrementen ständig die Feuchtigkeit des Nutzraums. Durch zumindest teilweisen Einsatz von korrosions- und säurebeständigen Werkstoffen für den Klimaschrank können somit Korrosion und die damit einhergehenden Nachteile zeitlich verzögert bzw. verhindert werden.

In einer weiteren vorteilhaften Ausgestaltung der Erfindung weißt der Klimaschrank einen Druckmessstutzen auf. Dieser ist vorzugsweise senkrecht am Klimaschrank angebracht und mit dessen Inneren, dem Nutzraum, verbunden.

Zum Messen des statischen Druckes der im Nutzraum befindlichen Luft mittels einer Druckmesseinrichtung ist diese in einer Ausführungsform über eine Druckmessleitung, beispielsweise in Form eines flexiblen Schlauches, mit dem Druckmessstutzen verbunden und befindet sich an einem vom Klimaschrank entfernten Ort. Diese Ausführungsform ist vorteilhaft, da auf diese Weise die Immissionen auf das Lagergut im Nutzraum des Klimaschrankes, wie sie auch durch elektromagnetische Wechselfelder entstehen, reduziert werden.

In einer anderen Ausführungsform der Erfindung ist die Druckmesseinrichtung direkt mit den Druckmessstutzen verbunden.

Zweckmäßigerweise weist der Klimaschrank in einer vorteilhaften Ausgestaltung eine Beleuchtungseinrichtung auf. Dadurch kann beispielsweise ein Tag-Nacht-Zyklus durch eine nicht zum Klimaschrank gehörende Steuereinrichtung ausgeführt werden.

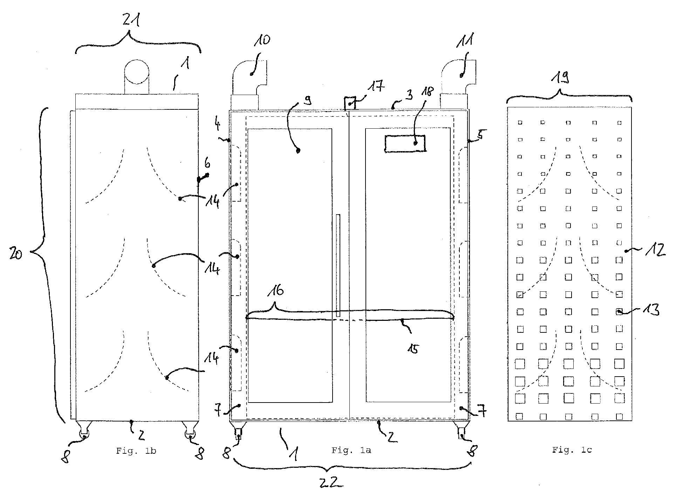

Die Erfindung soll nachfolgend lediglich beispielhaft, nicht jedoch beschränkend, anhand eines Ausführungsbeispiels näher erläutert werden. In den zugehörigen Zeichnungen zeigt
- Fig. 1a: eine Vorderansicht des mobilen Klimaschrankes,
- Fig. 1b: eine Seitenansicht des mobilen Klimaschrankes und
- Fig. 1c: eine Vorderansicht eines Luftdurchlasses.

Sowohl Fig. 1a als auch Fig. 1b zeigen denselben Klimaschrank 1. Der Klimaschrank 1 umfasst dabei eine untere Gehäusewand 2, eine obere Gehäusewand 3, eine linke Gehäusewand 4, eine rechte Gehäusewand 5, eine hintere Gehäusewand 6 und Türen 3, welche ein quaderförmiges, verschließbares, luftdichtes Gehäuse bilden, welches den Nutzraum 9 umschließt. Dabei weist der Klimaschrank 1 zumindest abschnittsweise eine nicht dargestellte Wärmedämmung auf.

An der unteren Gehäusewand 2 sind Räder 8 angeordnet, mit Hilfe derer der Klimaschrank 1 verfahren werden kann.

An der oberen Gehäusewand 3 sind zumindest ein Zuluftanschluss 10, ein Abluftanschluss 11 sowie ein Druckmessstutzen 17 angeordnet. Die nicht dargestellten Luftführungselemente, beispielsweise in Form von Schläuchen oder Rohren, welche den Klimaschrank 1 mit einer nicht dargestellten Klimatisierungsvorrichtung verbinden, sind am Zuluftanschluss 10 und am Abluftanschluss 11 des Klimaschrankes 1 auch mit vertauschter Zuordnung anschließbar. Der Druckmessstutzen 17 ist mittig der Gehäusewandbreite 22 angeordnet und mit dem Nutzraum 9 verbunden.

Der Zuluftanschluss 10 und der Abluftanschluss 11 sind so ausgeführt, dass sie die Zuluft über annähernd der gesamten Luftdurchlassbreite 19 verteilen, bevor die Zuluft in den Klimaschrank 1 eintritt. An der rechten Gehäusewand 5 und der linken Gehäusewand 4 sind jeweils Luftleiteinrichtungen 14 angeordnet. Durch die gebogene Form und Anordnung der Luftleiteinrichtung 14 wird die Luft annähernd gleichmäßig entlang der Gehäusewandhöhe 20 und der Gehäusewandtiefe 21 der linken Gehäusewand 4 verteilt, bevor sie, durch die Luftdurchlassöffnungen 13 der an der linken Gehäusewand 4 angeordneten Luftdurchlässe 12, in den Nutzraum 9 eintritt. Nach dem Durchströmen des Nutzraums 9 durchströmt die Luft die Luftdurchlassöffnungen 13 des an der rechten Gehäusewand 5 angeordneten Luftdurchlasses 12 sowie die, ebenfalls an der rechten Gehäusewand 5 angeordnete, Luftleiteinrichtung 14 annähernd gleichmäßig entlang der Gehäusewandhöhe 20 und der Gehäusewandtiefe 21 der rechten Gehäusewand 6 verteilt, bevor die Luft durch einen Abluftanschluss 11 sowie das nicht dargestellte Luftführungselement zu einer nicht dargestellten Klimatisierungsvorrichtung strömt.

Fig. 1c zeigt eine Vorderansicht des Luftdurchlasses 12 mit Luftdurchlassöffnungen 13, die in dieser Ausführungsform als rechteckige, ungleich große Luftdurchlassöffnungen 13 ausgeführt sind. Der Betrag der Flächeninhalte der Luftdurchlassöffnungen 13 nimmt entlang die Gehäusewandhöhe 21 von der oberen Gehäusewand 3 bis zur unteren Gehäusewand 2 zu. In einer nicht dargestellten Ausfürhungsform des Luftdurchlasses 12 bleibt der der Flächeninhalte der Luftdurchlassöffnungen 13 entlang die Gehäusewandhöhe 21 von der oberen Gehäusewand 3 bis zur unteren Gehäusewand 2 gleich. Der Luftdurchlass 12 ist austauschbar ausgeführt und umfasst nicht dargestellte Haltevorrichtungen zum Aufnehmen zumindest eines Einlegebodens 15.

Die Einlegebodenbreite 16 ist dabei größer als das Lichtmaß zwischen den Luftdurchlässen 12, welche jeweils an der rechten Gehäusewand 5 und der linken Gehäusewand 4 des quaderförmigen Gehäuses des Klimaschrankes 1 angeordnet sind.

Im Nutzraum 9 ist zumindest eine Beleuchtungseinrichtung 18 angeordnet, welche über eine nicht dargestellte Verbindung an eine nicht dargestellte Spannungsversorgung angeschlossen ist.

### Bezugszeichenliste

| | |
|---|---|
| 1 | Klimaschrank |
| 2 | untere Gehäusewand |
| 3 | obere Gehäusewand |
| 4 | linke Gehäusewand |
| 5 | rechte Gehäusewand |
| 6 | hintere Gehäusewand |
| 7 | Türen |
| 8 | Räder |
| 9 | Nutzraum |
| 10 | Zuluftanschluss |
| 11 | Abluftanschluss |
| 12 | Luftdurchlass |
| 13 | Luftdurchlassöffnungen |
| 14 | Luftleiteinrichtung |
| 15 | Einlegeboden |
| 16 | Einlegebodenbreite |
| 17 | Druckmessstutzen |
| 18 | Beleuchtungseinrichtung |
| 19 | Luftdurchlassbreite |
| 20 | Gehäusewandhöhe |
| 21 | Gehäusewandtiefe |
| 22 | Gehäusewandbreite |

## Patentansprüche

1. Mobiler Klimaschrank (1) umfassend:
- ein durch zumindest eine Tür (7) verschließbares luftdichtes Gehäuse,
- zumindest einen Zuluftanschluss (10) und einen Abluftanschluss (11) sowie
- sich paarweise gegenüberliegende Mittel zum Erzeugen einer horizontalen Strömung.

2. Mobiler Klimaschrank (1) nach Anspruch 1, **dadurch gekennzeichnet, dass** ein Mittel zum Erzeugen einer horizontalen Strömung zumindest einen Luftdurchlass (12) aufweist.

3. Mobiler Klimaschrank (1) nach einem der vorigen Ansprüche, **dadurch gekennzeichnet, dass** der Luftdurchlass (12) plattenförmig als Hohlraum ausgebildet ist und Luftdurchlassöffnungen (13) aufweist.

4. Mobiler Klimaschrank (1) nach einem der vorigen Ansprüche, **dadurch gekennzeichnet, dass** der Luftdurchlass (12) austauschbar ist.

5. Mobiler Klimaschrank (1) nach einem der vorigen Ansprüche, **dadurch gekennzeichnet, dass** Flächeninhalte von Luftdurchlassöffnungen (13) des Luftdurchlasses (12) unterschiedlich sind.

6. Mobiler Klimaschrank (1) nach einem der vorigen Ansprüche, **dadurch gekennzeichnet, dass** die Mittel zum Erzeugen einer horizontalen Strömung Luftleiteinrichtungen (14) umfassen.

7. Mobiler Klimaschrank (1) nach einem der vorigen Ansprüche, **dadurch gekennzeichnet, dass** der Klimaschrank (1) zumindest einen Einlegeboden (15) aufweist.

8. Mobiler Klimaschrank (1) nach einem der vorigen Ansprüche, **dadurch gekennzeichnet, dass** der Klimaschrank Halteelemente für Einlegböden (15) aufweist.

9. Mobiler Klimaschrank (1) nach einem der vorigen Ansprüche, **dadurch gekennzeichnet, dass** die Einlegebodenbreite (16) zumindest eines Einlegbodens (15) größer als das Lichtmaß sich gegenüberliegender Luftdurchlässe (12) ist.

10. Mobiler Klimaschrank (1) nach einem der vorigen Ansprüche, **dadurch gekennzeichnet, dass** der Klimaschrank zumindest teilweise Werkstoffe aus der Werkstoffgruppe der korrosions- und/ oder säurebeständigen Stähle aufweist.

11. Mobiler Klimaschrank (1) nach einem der vorigen Ansprüche, **dadurch gekennzeichnet, dass** der Klimaschrank (1) einen Druckmessstutzen (17) aufweist.

12. Mobiler Klimaschrank (1) nach einem der vorigen Ansprüche, **dadurch gekennzeichnet, dass** der Druckmessstutzen (17) senkrecht an einer Gehäusewand (2, 3, 4, 5, 6) angeordnet ist.

13. Mobiler Klimaschrank (1) nach einem der vorigen Ansprüche, **dadurch gekennzeichnet, dass** zumindest eine Beleuchtungseinrichtung (18) im Gehäuse angeordnet ist.
